# FASCICULE DE BREVET EUROPEEN

(11) **EP 2 809 544 B1**
(45) Date de publication et mention de la délivrance du brevet: **08.03.2017**
(21) Numéro de dépôt: 13706181.8
(22) Date de dépôt: 29.01.2013
(51) Int. Cl.: B60N 2/28

(54) **SIEGE AUTO POUR ENFANT, DESTINE A ETRE SOLIDARISE AU SIEGE D'UN VEHICULE AUTOMOBILE**
KINDERSITZ ZUR BEFESTIGUNG AM SITZ EINES KRAFTFAHRZEUGS
CHILD CAR SEAT, INTENDED TO BE JOINED TO THE SEAT OF A MOTOR VEHICLE

(30) Priorité: 31.01.2012 FR 1250907; 30.03.2012 FR 1252953
(43) Date de publication de la demande: 10.12.2014
(73) Titulaire: Dorel France, 49309 Cholet Cedex (FR)
(72) Inventeur: GAGNADE, Philippe, F-49300 Cholet (FR)
(74) Mandataire: Vidon Brevets & Stratégie
(86) Numéro de dépôt international: PCT/EP2013/051707
(87) Numéro de publication internationale: WO 2013/113708

(56) Documents cités:
- EP-A1- 0 816 163
- EP-A2- 1 486 384
- WO-A1-2008/068166
- WO-A2-2008/031583
- FR-A1- 2 890 343

## Description

### 1. Domaine de l'invention

Le domaine de l'invention est celui de la puériculture. Plus précisément, l'invention concerne les sièges pour enfant, encore appelés « sièges auto », destinés à être installés sur les sièges passagers de véhicules, notamment automobiles.

Plus précisément, l'invention vise à améliorer la sécurité et la protection des enfants transportés dans de tels sièges auto, notamment au niveau de la tête et du cou.

### 2. Art antérieur et inconvénients

On connaît de nombreux sièges pour enfants destinés à être installés dans une automobile. Ces sièges sont généralement formés d'une assise et d'un dossier définissant un fauteuil, dans lequel est installé l'enfant. L'assise présente généralement des accotoirs, ou accoudoirs, et le dossier des prolongements latéraux, s'étendant sensiblement au-dessus des accoudoirs, et appelés par la suite flancs latéraux. Le dossier est en général équipé d'une têtière, qui peut être mobile en hauteur par rapport à ce dossier. Cette têtière forme une zone d'appui pour la tête de l'enfant, et présente une portion de fond, sensiblement parallèle au fond du dossier, et des prolongements latéraux, appelés par la suite joues.

Un harnais de sécurité est prévu pour maintenir l'enfant dans le siège ainsi constitué, au moins tant que l'enfant n'a pas atteint un poids et/ou une taille minimale(s).

Toutefois, ces sièges présentent de nombreux inconvénients dont le principal réside dans une inadaptation à garantir une protection suffisante de l'enfant, en particulier au niveau de sa tête et de son cou, notamment en cas de choc latéral.

En effet, les sièges auto proposent de maintenir le buste de l'enfant au moyen du harnais de sécurité intégré au siège ou encore au moyen d'une ceinture de sécurité du véhicule, lorsque l'enfant est plus âgé.

Cependant, le centre de gravité de la tête est situé en avant de la jonction entre le crâne et la colonne cervicale. Lors d'un choc latéral, le torse se dérobe sous la tête qui se tourne vers le point d'impact en pivot et en flexion latérale. Ce mouvement tend à écarter les corps vertébraux du côté opposé à l'impact et les fait pivoter. Il peut en résulter des luxations, des déchirures de ligaments et/ou des fractures latérales par compression. En effet, on constate que pour un impact latéral, la valeur HIC (critère de blessure à la tête) peut atteindre 2000 (voire plus), soit deux fois plus que la valeur au-delà de laquelle la gravité des blessures au cerveau peut être fatale.

Ainsi, le harnais de sécurité ou la ceinture de sécurité ne permettent pas de maintenir immobile la tête de l'enfant en cas de choc latéral.

Les constructeurs automobiles proposent de plus en plus des « airbags » de protection de la tête. Cependant ces airbags sont inefficaces voire dangereux pour la protection des tout petits, car ils viennent heurter le côté du siège, générant un déplacement et/ou une déformation violents de celui-ci, ce déplacement étant transmis ensuite au corps, et notamment à la tête, de l'enfant.

En outre, un autre inconvénient majeur des sièges connus de l'Homme du métier réside notamment dans leur inadaptation aux changements morphologiques de l'enfant qui s'opèrent lors de la croissance. Par exemple, certains sièges destinés aux nouveaux-nés proposent une coque profonde et rembourrée destinée à absorber l'énergie d'un choc latéral. Cependant ces sièges deviennent rapidement exigus et inadaptés à la croissance de l'enfant.

Pour y remédier, des sièges auto par exemple décrits dans le document de brevet EP 0816163, visent à améliorer la sécurité de l'enfant en proposant des réglages d'écartement de prolongements latéraux effectués en fonction du réglage de la hauteur d'une têtière grâce à des moyens de liaison.

Le document FR2890343 est considéré comme l'art antérieur le plus proche et décrit un siège auto pour enfant correspondant au préambule de la revendication 1.

Cependant, du fait de l'écartement minimal des joues de la têtière nécessaire au confort et à la vision de l'enfant, de tels sièges ne permettent pas d'empêcher la tête de l'enfant de se déplacer, ou de « dodeliner », brutalement, pouvant entraîner blessure ou encore choc de la tête de l'enfant contre les extrémités de la têtière, en cas de choc violent.

### 3. Objectifs de l'invention

L'invention vise donc à fournir un siège auto permettant d'améliorer la sécurité de l'enfant assis dans ce siège auto, en particulier au niveau de la protection de sa tête, de son cou et de sa colonne vertébrale.

L'invention vise aussi à fournir, dans au moins un mode de réalisation, un siège auto qui offre une telle protection tout en permettant d'adapter le siège à la taille et au confort de l'enfant.

L'invention vise aussi à fournir, dans au moins un mode de réalisation, un siège auto qui évite au conducteur du véhicule de devoir se soucier du déclenchement de la protection optimale de la tête de l'enfant en cas de choc latéral.

De façon générale, la présente invention a pour objectif de réduire le risque de blessure au niveau de la tête de l'enfant, tout en lui procurant un confort adapté et évoluant en fonction de son âge.

### 4. Exposé de l'invention

Ces objectifs, ainsi que d'autres qui apparaîtront plus clairement par la suite sont atteints à l'aide d'un siège auto pour enfant, destiné à être monté notamment dans un véhicule automobile et comprenant une assise, un dossier muni de flancs latéraux et d'une têtière présentant une portion de fond, sensiblement parallèle au dossier, et deux joues latérales s'étendant à partir de ladite portion de fond.
Le siège auto selon l'invention est caractérisé en ce que ledit siège comprend des moyens de contrôle d'un déplacement d'au moins une partie desdites joues latérales entre une première position, dite de transport, et une deuxième position, dite position de sécurité, dans laquelle ladite partie mobile de la joue est rapprochée vers la tête de l'enfant selon ledit déplacement, celui-ci étant prédéterminé et contrôlé par lesdits moyens de contrôle.

En d'autres termes, au moins une partie de chacune des joues latérales de la têtière est conçue de façon à être mobile, de façon contrôlée et maîtrisée (à distinguer, bien sûr, d'une déformation accidentelle, non contrôlée, et donc très dangereuse) entre au moins deux positions prédéfinies :
- une première position, dite position de transport,
- une deuxième position, dite position de sécurité, dans laquelle cette partie mobile est rapprochée vers la tête de l'enfant.

Dans tout le texte, les termes « choc violent » évoquent un choc d'une force supérieure à un seuil prédéterminé, par exemple lors de la phase de conception, et qui met en danger la sécurité de l'enfant.

Un siège auto selon l'invention permet donc d'assurer à la fois le confort et la sécurité de l'enfant en cas de choc violent. En particulier, en absence de danger, la têtière se trouve dans la première position, dite position de transport. Cette position de transport correspond par exemple à un écartement suffisant des joues latérales permettant à l'enfant de tourner la tête, de libérer son champ de vision et lui procurant ainsi un certain confort. Plus qu'un simple agrément, cette notion de confort participe à la sécurité de l'enfant. En effet, une situation d'inconfort pourrait amener l'enfant à changer par lui-même, ou en faisant pression sur son entourage, les réglages du siège et ainsi à remettre en cause sa propre sécurité en cas de choc.

En cas d'apparition d'un choc latéral violent, la têtière adopte une deuxième position, dite position de sécurité, dans laquelle au moins une joue latérale - et le cas échéant les deux- se rapproche de la tête de l'enfant, assurant ainsi un blocage de la tête de l'enfant dès l'apparition du choc violent.

De ce fait, l'écartement des joues latérales est modifié lors d'un choc violent pour atteindre une position de sécurité.

La position de sécurité selon l'invention permet en effet d'éviter un déplacement et une accélération importante de la tête, d'où un maintien de l'axe de la tête de l'enfant dans le prolongement de l'axe de l'abdomen et une atténuation significative de la violence du choc pour la tête. En d'autres termes, lorsque les joues de la têtière sont dans la position de sécurité, les risques de blessures de la tête, du cou ou de la colonne vertébrale de l'enfant en sont réduits.

Selon les modes de réalisation de l'invention, une telle modification de l'écartement des joues latérales est symétrique et/ou asymétrique. En effet, en fonction de la direction du choc une position de sécurité peut-être envisagée de manière distincte pour chaque joue latérale.

Selon l'invention, une telle modification de l'écartement entre les joues latérales pour passer d'une position de transport à une position de sécurité dépend donc uniquement de la présence d'un choc violent. En conséquence, la modification de l'écartement des joues latérales pour passer en position de sécurité est indépendante du réglage de la hauteur de la têtière.

En d'autres termes, l'écartement entre les joues latérales est modifié lorsqu'un un choc violent survient par exemple sans entraîner de modification de la hauteur de la têtière.

La mise en oeuvre de la modification de l'écartement des joues latérales selon l'invention est donc distincte de celle proposée selon l'art antérieur du fait qu'elle dépend de la présence d'un choc violent et non d'un réglage en hauteur de la têtière et permet de ce fait de passer d'une position de transport à une position de sécurité.

Au contraire, la modification de l'écartement des joues latérales selon l'art antérieur permet uniquement de faire évoluer la position de transport en fonction de l'évolution de la taille de l'enfant et n'apporte aucune solution pour améliorer la sécurité de l'enfant en cas de choc violent.

La position de sécurité ne peut de ce fait être corrélée à une modification de l'écartement des joues latérales des positions de transport en fonction de l'évolution de la taille de l'enfant.

En effet, plus l'enfant va grandir plus les joues latérales en position de transport seront écartées afin de lui procurer un confort de déplacement de son visage au cours du transport sécurisé.

Au contraire, pour passer en position de sécurité, la modification de l'écartement des joues latérales mise en oeuvre selon l'invention, lorsqu'un choc violent survient, vise à protéger la tête de l'enfant de tout déplacement.

Les systèmes de réglage connus supposent donc des réglages manuels, et une intervention d'un utilisateur, pour placer les joues dans la position souhaitée. En revanche, dans le cadre de l'invention, il n'y a bien sûr aucune action humaine : la ou les joues passent automatiquement dans la position de sécurité, en présence d'un choc violent.

Un siège auto selon l'invention permet de plus de garantir le passage de la position de transport à la position de sécurité dès l'apparition d'un choc latéral violent et ce, de manière indépendante de l'opérateur ayant mis en place le siège auto dans l'habitacle de l'automobile. En particulier, le passage de la position de transport à la position de sécurité est contrôlé par les moyens de contrôle, qui agissent par exemple sur des moyens d'actionnement, internes au siège auto, dès que la force du choc latéral dépasse un seuil prédéterminé. Un siège auto selon l'invention permet donc de s'affranchir du jugé de l'opérateur ayant mis en place le siège auto dans l'habitacle. Un tel siège auto présente donc d'avantage de sécurité pour l'enfant que les sièges de l'art antérieur.

Avantageusement et selon au moins un mode de réalisation de l'invention, de contrôle comprennent ou coopèrent avec des moyens d'actionnement associés auxdits flancs latéraux du dossier, qui transmettent à une desdites joues un déplacement latéral appliqué à un desdits flancs latéraux, en cas de choc violent sur celui-ci.

Selon cette variante, le siège auto permet de fournir une réponse adaptée à un choc violent dans le but d'optimiser la protection de l'enfant. En effet, le déplacement latéral d'une des joues peut, s'il est réalisé selon une puissance trop importante, engendrer des risques liés à la compression de la tête de l'enfant entre les deux joues latérales. Si ce dit déplacement latéral est réalisé selon une trop faible puissance en revanche, un risque est engendré par le déplacement potentiel de la tête de l'enfant en dehors de l'axe de l'abdomen. Selon cette variante, l'effort qui anime au moins un des flancs latéraux, lors d'un choc violent, est transmis à au moins une des dites joues sous la forme d'un déplacement latéral d'une intensité inférieure ou égale à celui qui anime lesdits flancs, une partie du choc étant absorbée par les flancs. Le déplacement d'au moins une des joues latérales est donc adapté à l'intensité du choc. Ledit déplacement permet par conséquent de protéger efficacement l'enfant en cas de choc violent, tout en limitant les risques engendrés par la compression ou un déplacement brutal de la tête de l'enfant.

Ces moyens d'actionnement peuvent par exemple être directement intégrés dans les flancs latéraux du dossier.

En variante ou en combinaison, une partie supérieure d'un desdits flancs latéraux vient en contact avec une partie de la joue correspondante, au moins en cas de choc violent.

Selon cette variante, la mise en contact d'un des flancs latéraux avec une partie de la joue correspondante permet une transmission rapide et complète de l'effort généré par le choc, d'où l'activation d'un déplacement adapté d'au moins une des joues dans le but d'assurer une protection optimale de l'enfant.

Selon cette variante également, les moyens d'actionnement du déplacement des parties mobiles des joues sont réalisés sans mécanismes complexes, assurant ainsi une fiabilité accrue du siège auto en cas de choc violent notamment, et donc l'efficacité de la protection de l'enfant.

Avantageusement et selon au moins un mode de réalisation de l'invention, les joues sont mobiles en rotation par rapport à ladite portion de fond, selon un axe sensiblement parallèle audit dossier.

Selon cet aspect, en cas de choc violent, au moins une desdites joues latérales du dossier tend à se rabattre sur le côté du visage de l'enfant, obligeant ainsi la tête dudit enfant à rester dans l'alignement de l'axe de l'abdomen. Au moins une desdites joues latérales permet ainsi d'empêcher le déplacement de la tête de l'enfant sur le côté en cas de choc violent et/ou vers l'avant, et ainsi l'apparition d'un angle entre la tête et le torse de l'enfant.

Selon ce mode de réalisation également, au moins une desdites joues latérales, en se rabattant sur le côté du visage de l'enfant, augmente significativement la surface en contact entre ladite joue latérales et la tête de l'enfant. De ce fait, l'intensité de la force générée par le choc est répartie sur une plus grande surface, d'où une diminution locale des contraintes exercées et par conséquent des risques de blessures pouvant être engendrées par ces dernières.

Avantageusement et selon ce mode de réalisation, la structure de ladite têtière est réalisée dans une même pièce, présentant des zones de déformation permettant le déplacement desdites joues par rapport à la portion de fond.

La présence de zones de déformation dans ladite têtière peut permettre d'amortir la violence d'un choc violent lors de la transmission de la force de déplacement entre au moins un des flancs latéraux et la tête de l'enfant. Ainsi, ladite force de déplacement tend à déformer la structure de la têtière en engendrant un déplacement de la joue latérale correspondante vers la tête de l'enfant. Ce phénomène de déformation se nourrit d'une partie de l'énergie transmise par les flancs latéraux, d'où une réduction de l'intensité de la force de déplacement. De plus, en cas de présence de zones de déformation à l'interface entre les joues et la tête de l'enfant, la composition des joues leur permet de s'adapter à la tête de l'enfant en cas de choc violent, d'où une augmentation de la surface en contact et une délocalisation des contraintes exercées sur la tête de l'enfant. De ce fait, la présence de zones de déformation dans la têtière, selon cette variante de l'invention, permet un déplacement d'au moins une des joues latérales vers la tête de l'enfant, tout en amortissant la violence du choc.

Avantageusement et selon au moins un mode de réalisation de l'invention, les joues comprennent des moyens d'absorption d'énergie, aptes à coopérer avec la tête d'un enfant en cas de choc violent.

Une zone de déformation telle que décrite précédemment est un exemple de moyen d'absorption d'énergie. La présence d'un tel moyen d'absorption d'énergie dans les joues latérales confère donc les mêmes avantages que ceux associés aux propriétés d'absorption d'énergie des zones de déformation, à savoir une diminution de l'intensité de la force de déplacement transmise des flancs latéraux à la tête de l'enfant et une délocalisation des contraintes exercées sur cette dite tête, d'où une diminution des risques de blessure de l'enfant en cas de choc violent.

Avantageusement et selon au moins un mode de réalisation de l'invention, chacune desdites joues comprend un élément déformable et un élément poussoir, déplaçant ledit élément déformable vers la tête d'un enfant, en cas de choc violent.

Selon cette variante, la force de déplacement est exercée sur toute l'interface entre l'élément poussoir et l'élément déformable, d'où une augmentation du phénomène de déformation de la joue lorsque cette dernière entre en contact avec la tête de l'enfant, une meilleure absorption par la joue de l'énergie transmise, une délocalisation plus importante des contraintes et par conséquent, une diminution des risques de blessure de l'enfant en cas de choc violent.

En variante ou en combinaison, ladite partie supérieure d'un desdits flancs latéraux coopère avec ledit élément poussoir.

Selon cette variante de l'invention, la coopération d'au moins un desdits flancs latéraux avec ledit élément poussoir correspondant permet une transmission quasi totale de la force de déplacement engendrée par le choc. La vitesse de déplacement des joues correspondantes est donc adaptée à la violence du choc afin de permettre à ces dernières de venir rapidement bloquer la tête de l'enfant, limitant ainsi les risques de blessure.

Avantageusement et selon au moins un mode de réalisation de l'invention, l'élément déformable est un élément de dissipation d'énergie, comprenant au moins un sac contenant de l'air (ou un autre gaz), notamment à la pression atmosphérique, dont la paroi est étanche (en l'absence de sollicitation) et présente des orifices calibrés, permettant la libération progressive de l'air en cas de sollicitation forte, correspondant à un choc violent.

Les parois du dispositif sont préférentiellement réalisées avec un matériau élastique, par exemple en Éthylène-acétate de vinyle, (en anglais : Ethylene Vinyl Acetate ou EVA) ou en polyéthylène basse densité, avec une épaisseur maîtrisée (par exemple entre 1 et 2 mm) permettant une déformation des parois dans le domaine élastique lorsque le dispositif est comprimé. Ces parois permettent un retour à la forme d'origine du dispositif quand l'effort de compression appliqué est enlevé.

Lorsque les sollicitations sont lentes, seule la rigidité des parois offre une résistance à l'effort appliqué. En revanche, en cas de choc, la paroi se déforme provoquant une variation du volume intérieur et donc une fuite de l'air par les orifices calibrés. Dans ce cas, la résistance pilotée par la fuite d'air prend le pas sur la résistance élastique des parois et entraîne une dissipation d'énergie.

Cette technique est par exemple décrite dans le document de brevet EP-10163494.

Selon cette variante, les joues latérales présentent de bonnes aptitudes à subir des déformations, à absorber l'énergie d'un choc et par conséquent, une meilleure capacité à amortir la violence d'un choc.

Avantageusement et selon au moins un mode de réalisation de l'invention, lesdits moyens de contrôle agissent sur des moyens pyrotechniques ou à gaz sous pression.

Selon cette variante, l'utilisation de moyens pyrotechniques ou à gaz sous pression permet l'obtention d'une grande réactivité, dans le temps, du déplacement d'au moins une partie des joues latérales vers la position de sécurité. A titre d'exemple, en cas de choc violent, une pastille explosive amorce la combustion d'un combustible solide qui se sublime en gaz pour gonfler un coussin de sécurité.

Avantageusement et selon cette variante, les moyens de contrôle agissent sur le déploiement d'un coussin de sécurité gonflable.

Le coussin de sécurité gonflable est un système caractérisé par une très grande capacité de déformation et donc d'absorption de l'énergie d'un choc. Selon cette variante, ledit coussin gonflable permet donc un meilleur amortissement de la violence du choc.

Selon cette variante également, ledit coussin gonflable peut exercer une double fonction à savoir, la fonction d'amortisseur mais aussi la fonction de mise en mouvement des joues latérales.

Avantageusement et selon au moins un mode de réalisation de l'invention, ledit seuil déterminant un choc violent correspond à une force de l'ordre de 2000 Newtons.

En considérant le poids d'un jeune enfant comme environ égale à 3kg, une force de l'ordre de 2000 Newtons correspond à l'impact subi par ce dit bébé après une chute d'un peu plus de 3 mètres de hauteur. Selon cette variante de l'invention, l'adoption d'un tel seuil permet de garantir l'activation du dispositif de sécurité en cas de choc pouvant constituer un danger pour la sécurité de l'enfant.

### 5. Exposé de l'invention

D'autres buts, caractéristiques et avantages de l'invention apparaîtront à la lecture de la description suivante donnée à titre indicatif uniquement et non limitatif et qui se réfèrent aux figures annexées dans lesquelles :
- la figure 1 est une vue schématique de face du siège auto selon un mode de réalisation de l'invention, en position dite de transport. La composition interne des différents éléments de structure du siège n'est pas représentée à des fins de clarté ;
- la figure 2 est une vue schématique de face du siège auto selon un mode de réalisation de l'invention, en position dite de sécurité. La composition interne des différents éléments de structure du siège n'est pas représentée à des fins de clarté ;
- la figure 3 est une vue schématique en coupe d'une des joue latérales selon un mode de réalisation de l'invention ;
- la figure 4 est une vue schématique en coupe A-A de la figure 3 ;
- la figure 5 est une vue schématique en coupe B-B de la figure 3 ;
- la figure 6 est une vue schématique en coupe d'une des joue latérales selon un mode de réalisation de l'invention, en position dite de transport ;
- la figure 7 est une vue schématique en coupe A-A de la figure 6 ;
- la figure 8 est une vue schématique en coupe d'une des joues latérales selon un mode de réalisation de l'invention, en position dite de sécurité ;
- la figure 9 est une vue schématique de face de la têtière selon un mode de réalisation de l'invention ;
- la figure 10 est une vue schématique d'une des joues latérales selon un mode de réalisation de l'invention, en position dite de transport ;
- les figures 11A et 11B sont des vues schématiques de la joue latérale de la figure 10, en position dite de sécurité, le tissu de revêtement étant respectivement extensible ou muni de zones fusibles.

### 6. Exposé de l'invention

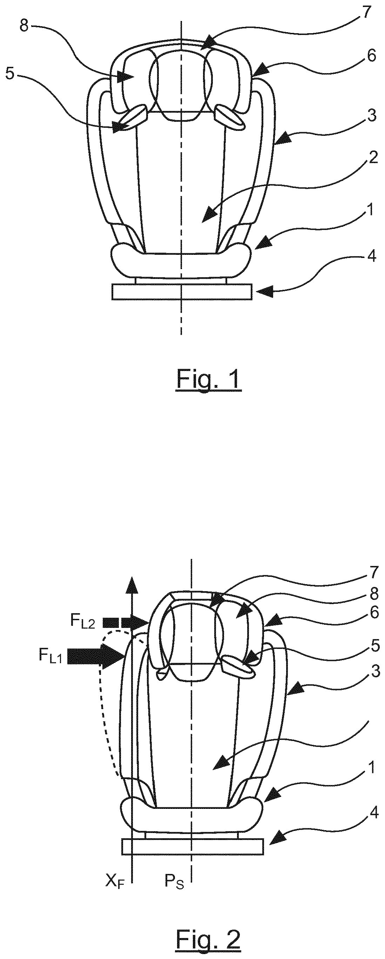

Sur les figures, les échelles et les proportions ne sont pas systématiquement strictement respectées et ce, à des fins d'illustration et de clarté. Dans toute la description détaillée qui suit en référence aux figures, sauf indication contraire, chaque pièce du siège auto est décrite telle qu'elle est agencée lorsque le siège est monté dans l'habitacle d'un véhicule automobile. Cet agencement est notamment représenté sur les figures 1 et 2.

L'invention propose donc de mettre en oeuvre des moyens de contrôle du déplacement d'au moins une partie d'une joue de la têtière, en cas de choc violent. Selon les modes de réalisation, ces moyens de contrôle forment également moyens d'actionnement du déplacement, coopèrent avec des moyens d'actionnement, et/ou commandent des moyens d'actionnement.

Un siège auto selon le mode de réalisation des figures présente une symétrie par rapport à un plan de symétrie référencé Pₛ sur les figures et qui s'étend sensiblement le long du plan de symétrie du véhicule dans lequel le siège est monté. En d'autres termes, ce plan de symétrie, représenté notamment sur les figures 1 et 2, est vertical et s'étend longitudinalement le long du véhicule dans lequel le siège est monté.

Le siège auto comprend une assise 1 horizontale et perpendiculaire au plan de symétrie Pₛ, et un dossier 2 relié à l'assise 1 et agencé à la fois perpendiculairement à l'assise 1 et au plan de symétrie Pₛ.

L'assise 1 est fixée sur une embase 4, elle-même destinée à être posée sur le siège d'un véhicule automobile.

Le dossier 2 est muni de deux flancs latéraux 3, reliés, dans ce mode de réalisation, au dossier 2 par des liaisons pivot ayant pour axe de rotation, pour au moins une de ces liaisons pivot, un axe, référencé X_{F} sur les figures, sensiblement parallèle au plan de symétrie Pₛ. Dans certains modes de réalisation, la position des flancs latéraux peut ainsi être réglée, pour s'adapter à l'enfant transporté. Dans d'autres modes de réalisation, les flancs latéraux ne sont pas réglables. Dans ce cas, la liaison pivot peut par exemple être remplacée par une zone de déformation, permettant de contrôler le déplacement d'un flanc, en cas de choc latéral.

Le dossier 2 est équipé d'une têtière 6, portant dans ce mode de réalisation deux éléments 5 de guidage d'une sangle de ceinture de sécurité du véhicule automobile.

La têtière peut être réglable en hauteur par rapport au dossier, selon diverses techniques connues mettant par exemple en oeuvre une coulisse, ou fixe en hauteur par rapport au dossier, notamment si l'assise est réglable en hauteur.

La têtière 6 comprend une portion de fond 7, sensiblement perpendiculaire au plan Pₛ, et deux joues 8 latérales s'étendant à partir de ladite portion de fond 7 dans des plans sensiblement parallèles au plan Pₛ. Dans le cas où la têtière est fixe par rapport au dossier, la portion de fond 7 peut être formée directement par le dossier.

Dans toute la suite et en raison de la présence d'un plan de symétrie Pₛ au sein de la structure du siège auto, seule l'un des deux cotés sera décrit. L'homme du métier n'aura pas de difficultés à reproduire de l'autre coté la structure décrite pour ce coté.

Selon un premier mode de réalisation, représenté sur la figure 2 notamment, la têtière 6 du siège auto et les joues 8 latérales sont formées d'une seule pièce dans une structure localement souple. Les joues 8 latérales et la têtière 6 sont par exemple formées en un matériau ductile, c'est-à-dire ayant de bonnes capacités à se déformer plastiquement sans se rompre. Cette structure souple permet la mobilité de la joue entre une position de transport et une position de sécurité dans laquelle la joue est rapprochée de la tête de l'enfant par déformation de cette structure souple.

Dans un autre mode de réalisation, la joue latérale est directement portée par la partie supérieure du flanc latéral de sorte qu'un déplacement du flanc latéral entraîne un déplacement de la joue latérale par contact direct. Chaque flanc latéral forme alors les moyens d'actionnement du déplacement de la partie mobile de la joue de la position de transport à la position de sécurité.

Dans un autre mode de réalisation, un espace est ménagé, en position de transport, entre la partie supérieure du flanc et la joue de sorte que les petits chocs ou vibrations inhérentes au déplacement du véhicule ne gênent pas la tête de l'enfant. En revanche, en cas de choc violent, l'espace ménagé est comblé, et la partie supérieure du flanc latéral entre en contact contre la joue et assure son déplacement vers la position de sécurité. L'espace ménagé entre la joue et le flanc dépend des matériaux utilisés et du seuil prédéterminé fixé.

Dans l'ensemble des modes de réalisation décrits jusque là, en cas de choc latéral violent, la porte du véhicule entre en contact avec le flanc latéral correspondant 3 et exerce, sur ce même flanc latéral 3, une force latérale dont la composante normale au plan P_{S}, référencée F_{L1} sur les figures, orientée vers l'intérieure du siège, fait pivoter le flanc latéral 3 suivant son axe de rotation X_{F}.

La force latérale peut également être transmise sans l'intermédiaire de la porte latérale du véhicule, mais simplement par inertie due au choc. Dans tous les cas, le flanc latéral 3 entre alors en contact avec la joue 8 latérale correspondante (soit directement si la joue est portée par le flanc latéral suivant la première variante décrite ci-dessus, soit après comblement de l'espace résiduel suivant la deuxième variante décrite ci-dessus) et lui transmet une force latérale, référencée F_{L2} sur les figures. Sous l'action de cette force latérale F_{L2}, la joue 8 latérale se déplace et/ou se déforme alors vers l'intérieur de la têtière 6 jusqu'à entrer en contact avec la tête de l'enfant. Ce déplacement et/ou cette déformation est alimentée par l'énergie du choc transmise, d'où une absorption de cette énergie et un amortissement du choc exercé sur la tête de l'enfant. La joue 8 latérale étant de préférence formée en un matériau présentant une bonne ductilité, elle se déforme sous l'action de la force F_{L2} sans rompre et de façon à garder sa forme finale.

Selon les modes de réalisation, la joue 8 peut ainsi se déplacer en rotation et/ou en translation par rapport au fond 7 de la têtière. L'axe de rotation peut se trouver au niveau du fond 7, ou à proximité de ce dernier, par exemple sur la joue 8, qui présente alors deux portions, l'une fixe par rapport au fond, et l'autre mobile.

Le déplacement est contrôlé, pour atteindre spécifiquement la position de sécurité prédéfinie, à l'aide de moyens de guidage (rainures, axes, ...) et/ou de butée, formant moyens de contrôle.

Il est prévu qu'au moins la joue se trouvant du côté du choc se déplace et/ou se déforme. Dans certains modes de réalisation, les deux joues peuvent se déplacer, simultanément ou de façon légèrement décalée dans le temps, de façon symétrique par rapport au plan Pₛ ou avec des intensités ou des amplitudes différentes. Ceci peut permettre de restreindre l'espace entre les deux joues, et donc d'éviter un effet de rebond de la tête de l'enfant après le premier impact.

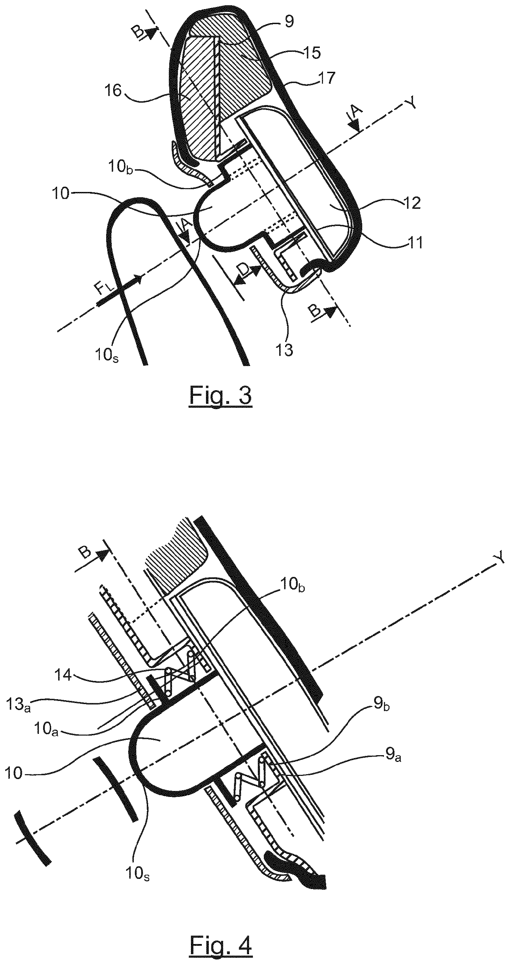

Selon d'autres modes de réalisation et tel que représenté sur les figures 3, 4, 5, 6, 7, 8 et 9, les joues 8 latérales comprennent un système proactif mécanique, composé d'un poussoir 10, formant moyens d'actionnement, d'un support 11 pour un sac, ou une poche, déformable et d'un sac 12. Ces différents éléments sont tous agencés le long d'un axe référencé Y sur les figures et qui s'étend perpendiculairement au plan Pₛ, en passant par une partie supérieure du flanc latéral 3, la joue 8 latérale et le centre de la tête de l'enfant. Cet ensemble proactif comprenant le poussoir 10, le support 11 et le sac 12 est agencé entre la partie supérieure du flanc latéral 3 et la tête de l'enfant.

Le sac 12 peut contenir de l'air, à pression atmosphérique. Il présente une paroi élastique, par exemple en EVA, qui est étanche en l'absence de sollicitation forte. La paroi élastique est par ailleurs percée d'orifices calibrés, permettant de libérer de façon contrôlée l'air contenu dans le sac, en cas de sollicitation forte, correspondant notamment à un choc violent. Ceci permet d'absorber efficacement une partie de l'énergie du choc, tout en offrant un bon confort en régime normal.

Cet ensemble proactif mécanique est logé dans un carter, par exemple plastique, formant moyens de contrôle. Ce carter comprend une armature 9 interne et une armature 13 externe qui définissent une enceinte de réception du système proactif et de la joue 8 latérale. L'ensemble proactif mécanique est monté dans le carter de telle sorte que ses déplacements sont limités à des mouvements de translations exclusivement selon l'axe Y une première position, dite position de recul, et une deuxième position, dite position avancée, correspondant respectivement aux positions de transport et de sécurité des joues latérales.

Le poussoir 10 comprend une embase solidaire du support 11 et un dôme 10s formant butée, dirigée vers le flanc 3 latéral du siège auto et destiné à être percuté par la partie supérieure du flanc latéral lors d'un choc violent. Le poussoir 10 comprend en outre deux ailes 10b latérales s'étendant parallèlement à l'embase, à mi-distance entre l'embase et le sommet du dôme 10s.

Des éléments structurels 15, 16 déformables et/ou rigides, disposés de part et d'autre de l'armature interne 9, permettent d'isoler cette dernière au sein de la joue latérale 8, de lui donner sa forme et d'amortir la force pouvant être générée par un choc extérieur. Un revêtement souple 17 est utilisé pour isoler les composantes internes de la joue latérale 8 de leur environnement. Ce revêtement souple 17 peut être composé d'un tissu extensible et/ou comprenant une ou plusieurs zones fusibles caractérisées par la présence de coutures, d'amincissements ou de portions découpées au laser et invisibles à l'oeil nu.

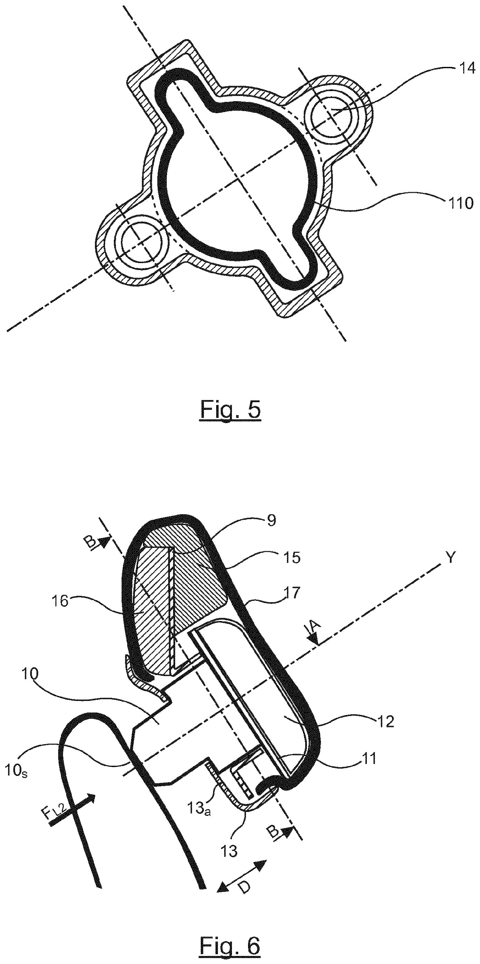

En position de recul, telle que représentée par les figures 5, 6 et 7, des ressorts tenseurs 14, agencés de part et d'autre du poussoir 10, entre l'armature interne 9 et les ailes 10b du poussoir 10 et s'étendant sensiblement selon un axe parallèle à l'axe Y, maintiennent le poussoir 10 en contact d'une portion 13a de l'armature externe 13 tandis que le support 11 de l'airbag est maintenu en contact avec une portion 9a de l'armature interne 9. Dans cette position, le dôme 10s formant butée 10 débouche de l'armature externe 13 vers la partie supérieure du flanc 3 latéral par un orifice ménagé à cet effet sur l'armature externe 13. En position de recul, le dôme 10s formant butée fait saillie d'une distance D par rapport à l'armature externe 13.

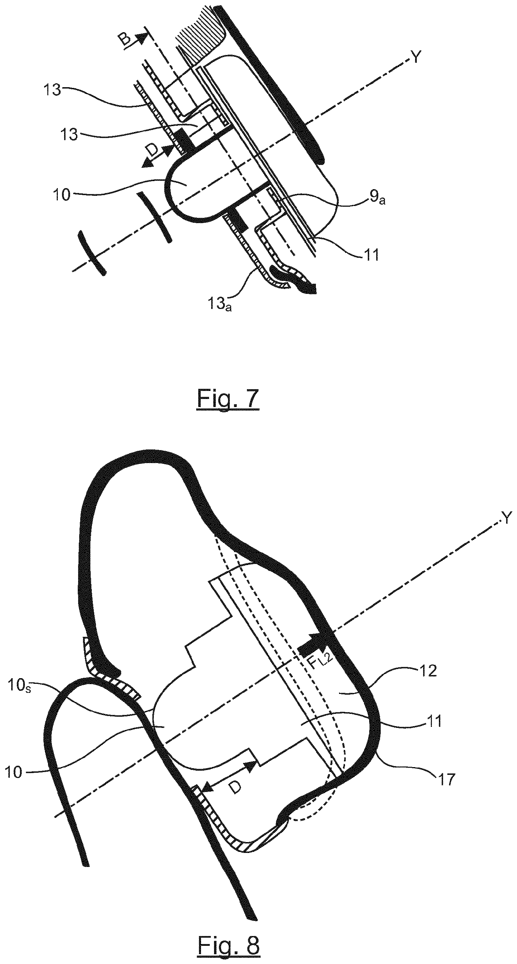

En cas de choc latéral violent, la partie supérieure du flanc latéral entre en contact avec le sommet du dôme 10s du poussoir 10, lui transmettant une force latérale F_{L2}. Si cette force F_{L2} est supérieure à la force de tension exercée par les ressorts 14, le poussoir se déplace alors en translation selon l'axe Y dans la direction de la tête de l'enfant, engendrant un déplacement identique de l'ensemble du système proactif mécanique. En l'absence de résistance à ce déplacement, le système proactif mécanique atteint alors la position avancée. Dans cette position, notamment représentée par la figure 8, les ailes 10b du poussoir 10 compriment les ressorts 14 et exercent une force contre la portion 9b de l'armature interne 9 qui portent la base des ressorts. Le support 11 d'airbag porté par l'armature 9 interne entraîne l'airbag 12 en déplacement d'une distance D vers la tête de l'enfant, déformant dans le même temps le revêtement souple 17.

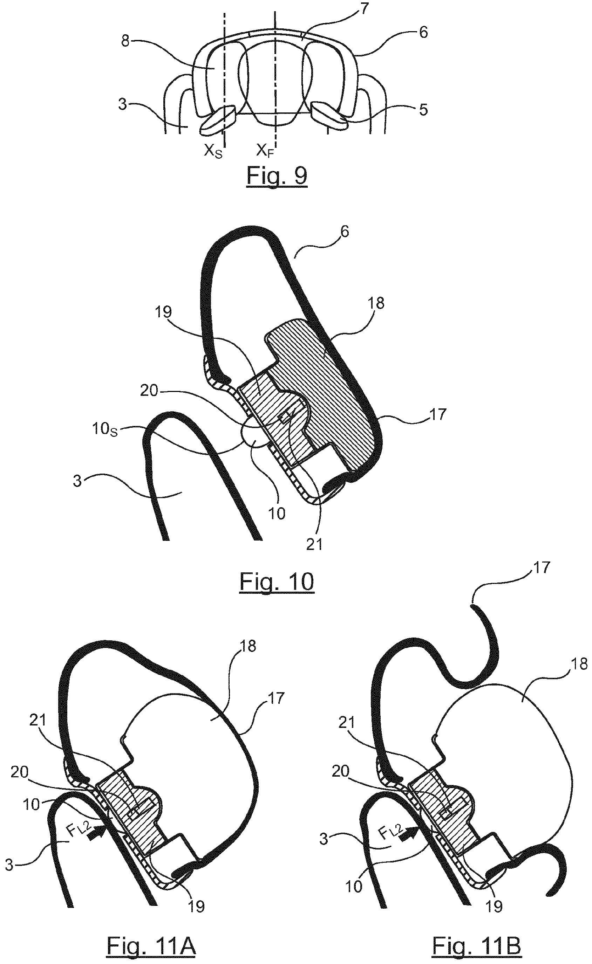

Selon un autre mode réalisation et tel que représenté par la figure 9, la têtière 6, de structure rigide, est composée de joues latérales 8 articulées. Par exemple, les joues latérales 8 sont reliées par une liaison pivot avec le reste de la têtière 6 selon un axe référencé par X_{J} sur les figures, sensiblement parallèle à l'axe X_{F}.

En position de transport, la joue 8 latérale n'est en contact ni avec la partie supérieure du flanc latéral 3, ni avec la tête de l'enfant.

En cas de choc latéral, le flanc latéral 3 (formant au moins une partie des moyens d'actionnement) entre en contact avec la joue 8 latérale, lui transmettant une force latérale F_{L2}. Si cette force F_{L2} est supérieure, par exemple à 2000 Newtons, et en l'absence de résistance, le flanc latéral pivote alors autour de l'axe X_{J} en direction de la tête de l'enfant.

Selon un autre mode de réalisation et tel que représenté par les figures 10 et 11A, 11B la têtière 6, de structure rigide, intègre un ensemble de type « airbag » composé d'un sous-ensemble pyrotechnique ou à gaz et d'un sac gonflable 18.

La forme du sac gonflable 18 peut être définie pour s'adapter à la morphologie de l'enfant, afin de protéger sa tête et son cou de façon efficace.

En cas de choc latéral violent, le flanc latéral 3 entre en contact avec le sommet 10s du poussoir 10, lui transmettant une force latérale F_{L2}. Si cette force F_{L2} est supérieure, par exemple à 2000 Newtons, le poussoir 10 se déplace alors en translation selon l'axe Y dans la direction de la tête de l'enfant et vient pousser un percuteur 20 métallique. Ledit percuteur 20 métallique perce alors une cartouche de gaz 21 qui gonfle le sac gonflable 18, initialement plié dans le support 19 pour airbag. Le sac 18 gonflé s'extrait alors du support 19 pour airbag, de façon contrôlée : le sac 18 déforme (figure 11A) le revêtement 17, réalisé dans un matériau élastique, et/ou déchire (figure 11B) ce revêtement 17, en des zones fusibles prévues à cet effet, de façon à se rapprocher de la tête de l'enfant, tel que représenté sur les figures 11A, 11B.

## Revendications

1. Siège auto pour enfant, destiné à être monté notamment dans un véhicule automobile, comprenant une assise (1) et un dossier (2) muni de flancs latéraux (3) et d'une têtière (6) présentant une portion de fond (7), sensiblement parallèle au dossier, et deux joues latérales (8) s'étendant à partir de ladite portion de fond, **caractérisé en ce que** ledit siège comprend des moyens de contrôle (10, 11, 12, 18) d'un déplacement de sécurité prédéterminé d'au moins une partie desdites joues latérales (8), en cas de choc latéral contre ledit siège, dit choc violent, depuis une première position, dite position de transport, vers une deuxième position, dite position de sécurité, dans laquelle ladite partie mobile de la joue (8) est rapprochée vers la tête de l'enfant,
lesdits moyens de contrôle (10,11,12,18) assurant ledit déplacement de sécurité lors dudit choc violent, ledit choc violent correspondant à un choc latéral présentant une force supérieure à un seuil prédéterminé.

2. Siège auto selon la revendication 1, **caractérisé en ce que** lesdits moyens de contrôle comprennent ou coopèrent avec des moyens d'actionnement (10) associés auxdits, et/ou intégrés dans lesdits, flancs latéraux (3) du dossier, et transmettent à une desdites joues un déplacement latéral appliqué à un desdits flancs latéraux (3), lors dudit choc violent sur celui-ci.

3. Siège auto selon la revendication 2, **caractérisé en ce qu'**une partie supérieure d'un desdits flancs latéraux (3) vient en contact avec une partie de la joue (8) correspondante, au moins lors dudit choc violent.

4. Siège auto selon l'une quelconque des revendications 1 à 3, **caractérisé en ce que** lesdites joues (8) sont mobiles en rotation par rapport à ladite portion de fond (7), selon un axe sensiblement parallèle audit dossier (2).

5. Siège auto selon la revendication 4, **caractérisé en ce que** la structure de ladite têtière (6) est réalisée dans une même pièce, présentant des zones de déformation permettant le déplacement desdites joues par rapport à la portion de fond.

6. Siège auto selon l'une quelconque des revendications 1 à 5, **caractérisé en ce que** lesdites joues comprennent des moyens d'absorption d'énergie (15, 16), aptes à coopérer avec la tête d'un enfant lors dudit choc violent.

7. Siège auto selon l'une quelconque des revendications 1 à 6, **caractérisé en ce que** chacune desdites joues comprend un élément déformable et un élément poussoir (10), déplaçant ledit élément déformable (12, 18) vers la tête d'un enfant, lors dudit choc violent.

8. Siège auto selon les revendications 3 et 7, **caractérisé en ce que** ladite partie supérieure d'un desdits flancs latéraux coopère (3) avec ledit élément poussoir (10).

9. Siège auto selon l'une quelconque des revendications 7 et 8, **caractérisé en ce que** ledit élément déformable (12, 18) comprend au moins un sac à paroi étanche comprenant des orifices calibrés permettant l'évacuation contrôlée de l'air contenu dans ledit sac lors dudit choc violent.

10. Siège auto selon l'une quelconque des revendications 1 à 9, **caractérisé en ce que** lesdits moyens de contrôle (10, 11, 12, 18) agissent sur des moyens pyrotechniques ou à gaz sous pression (20, 21).

11. Siège auto selon la revendication 10, **caractérisé en ce que** lesdits moyens de contrôle agissent sur le déploiement d'un coussin de sécurité gonflable (18).

12. Siège auto selon l'une quelconque des revendications 1 à 11, **caractérisé en ce que** ledit seuil prédéterminé déterminant ledit choc violent correspond à une force de l'ordre de 2000 Newtons.

## Patentansprüche

1. Autositz für Kinder, der dazu vorgesehen ist, insbesondere in einem Kraftfahrzeug montiert zu werden, der einen Sitz (1) und eine Lehne (2) aufweist, die mit Seitenflanken (3) und einem Kopfstück (6) ausgestaltet ist, das einen Fondabschnitt (7), der im Wesentlichen parallel zu der Lehne ist, und zwei laterale Backen (8), die sich ausgehend von dem Fondabschnitt erstrecken, aufweist, **dadurch gekennzeichnet, dass** der Sitz Mittel zum Steuern (10, 11, 12, 18) einer vorbestimmten Sicherheitsverlagerung wenigstens eines Teils der lateralen Backen (8) im Falle eines seitlichen Aufpralls gegen den Sitz, genannt gewaltsamer Aufprall, von einer ersten Position, genannt Transportposition, zu einer zweiten Position, genannt Sicherheitsposition, in welcher der bewegbare Teil der Backen (8) in Richtung des Kopfes des Kindes herangerückt ist, aufweist,
wobei die Mittel zum Steuern (10, 11, 12, 18) die Sicherheitsverlagerung bei dem gewaltsamen Aufprall sicherstellen, wobei der gewaltsame Aufprall einem seitlichen Aufprall mit einer einen vorbestimmten Schwellwert überschreitenden Kraft entspricht.

2. Autositz nach Anspruch 1, **dadurch gekennzeichnet, dass** die Mittel zum Steuern Betätigungsmittel (10) aufweisen oder damit zusammenwirken, die mit den Seitenflanken (3) der Lehne verbunden sind und/oder darin integriert sind, und eine an eine der Seitenflanken (3) angewandte seitliche Verlagerung, bei dem gewaltsamen Aufprall auf sie, an eine der Backen überträgt.

3. Autositz nach Anspruch 2, **dadurch gekennzeichnet, dass** ein oberer Teil einer der Seitenflanken (3) in Kontakt mit einem Teil der entsprechenden Backe (8) kommt, zumindest bei dem gewaltsamen Aufprall.

4. Kindersitz nach einem Ansprüche 1 bis 3, **dadurch gekennzeichnet, dass** die Backen (8) drehbewegbar um den Fondabschnitt (7) entlang einer Achse sind, die im Wesentlichen parallel zu der Lehne (2) ist.

5. Kindersitz nach Anspruch 4, **dadurch gekennzeichnet, dass** die Struktur des Kopfstückes (6) in einem einzigen Stück verwirklicht ist, das Zonen zur Verformung aufweist, welche die Verlagerung der Backen bezüglich des Fondabschnittes ermöglichen.

6. Autositz nach einem Ansprüche 1 bis 5, **dadurch gekennzeichnet, dass** die Backen Mittel zur Absorption von Energie (15, 16) aufweisen, die geeignet sind, mit dem Kopf eines Kindes bei dem gewaltsamen Aufprall zusammenzuwirken.

7. Autositz nach einem Ansprüche 1 bis 6, **dadurch gekennzeichnet, dass** jede der Backen ein verformbares Element und ein Drückelement (10) aufweist, welches das verformbare Element (12, 18) bei dem gewaltsamen Aufprall in Richtung des Kopfes eines Kindes verlagert.

8. Autositz nach einem Ansprüche 3 und 7, **dadurch gekennzeichnet, dass** der obere Teil einer der Seitenflanken (3) mit dem Drückelement (10) zusammenwirkt.

9. Autositz nach einem Ansprüche 7 und 8, **dadurch gekennzeichnet, dass** das verformbare Element (12, 18) wenigstens einen Beutel mit dichter Wand aufweist, der kalibrierte Öffnungen aufweist, welche eine kontrollierte Evakuation der in dem Beutel enthaltenen Luft bei dem gewaltsamen Aufprall ermöglicht.

10. Autositz nach einem Ansprüche 1 bis 9, **dadurch gekennzeichnet, dass** die Mittel zum Steuern (10, 11, 12, 18) auf pyrotechnische Mittel oder auf Gas unter Druck (20, 21) einwirken.

11. Autositz nach Anspruch 10, **dadurch gekennzeichnet, dass** die Mittel zum Steuern auf das Entfalten eines aufblasbaren Sicherheitskissens (18) einwirken.

12. Autositz nach einem Ansprüche 1 bis 11, **dadurch gekennzeichnet, dass** der vordefinierte Schwellwert, welcher den gewaltsamen Aufprall bestimmt, einer Kraft in der Größenordnung von 2000 Newton entspricht.

## Claims

1. Child car seat, intended to be installed in particular in a motor vehicle, comprising a seat bottom (1) and a seat back (2) provided with side flanks (3) and a headrest (6) having a back portion (7), substantially parallel to the seat back, and two side cheeks (8) extending from said back portion,
**characterised in that** said seat comprises means for controlling (10, 11, 12, 18) a predetermined safety displacement of at least one portion of said side cheeks (8), in the event of a side impact against said seat, referred to as a violent impact, from a first transport position to a second safety position, wherein said mobile portion of the cheek (8) is moved closer to the child's head,
said means for controlling (10, 11, 12, 18) providing said safety displacement at the time of said violent impact, said violent impact corresponding to a side impact having a force greater than a predetermined threshold.

2. Car seat according to claim 1, **characterised in that** said means for controlling include or cooperate with means for actuating (10) associated with, and/or integrated in said side flanks (3) of the seat back, and transmit to one of said cheeks a lateral displacement applied to one of said side flanks (3), at the time of said violent impact on the latter.

3. Car seat according to claim 2, **characterised in that** an upper portion of one of said side flanks (3) comes into contact with a portion of the corresponding cheek (8), at least at the time of said violent impact.

4. Car seat according to any of claims 1 to 3, **characterised in that** said cheeks (8) are mobiles in rotation in relation to said back portion (7), according to an axis substantially parallel to said seat back (2).

5. Car seat according to claim 4, **characterised in that** the structure of said headrest (6) is carried out in the same piece, having zones of deformation that allow for the displacement of said cheeks in relation to the back portion.

6. Car seat according to any of claims 1 to 5, **characterised in that** said cheeks include means for absorbing energy (15, 16), able to cooperate with the head of a child at the time of said violent impact.

7. Car seat according to any of claims 1 to 6, **characterised in that** each of said cheeks comprises a deformable element and a push-button element (10), moving said deformable element (12, 18) towards the head of a child, at the time of said violent impact.

8. Car seat according to claims 3 and 7, **characterised in that** said upper portion of one of said side flanks cooperates (3) with said push-button element (10).

9. Car seat according to any of claims 7 and 8, **characterised in that** said deformable element (12, 18) comprises at least one bag with a sealed wall comprising calibrated orifices allowing for the controlled removal of the air contained in said bag at the time of said violent impact.

10. Car seat according to any of claims 1 to 9, **characterised in that** said means for controlling (10, 11, 12, 18) acting on pyrotechnical or pressurised gas means (20, 21).

11. Car seat according to claim 10, **characterised in that** said means for controlling act on the deployment of an airbag (18).

12. Car seat according to any of claims 1 to 11, **characterised in that** said predetermined threshold determining said violent impact corresponds to a force of a magnitude of 2000 Newtons.
